(19) Europäisches Patentamt
European Patent Office
Office européen des brevets

(11) **EP 2 554 053 B1**

(12) **EUROPEAN PATENT SPECIFICATION**

(45) Date of publication and mention
of the grant of the patent:
**14.10.2015 Bulletin 2015/42**

(51) Int Cl.:
**A23G 9/04** *(2006.01)*          **A23G 9/36** *(2006.01)*

(21) Application number: **11765726.2**

(86) International application number:
**PCT/JP2011/058186**

(22) Date of filing: **31.03.2011**

(87) International publication number:
**WO 2011/125826 (13.10.2011 Gazette 2011/41)**

(54) **ICE CREAM OR ICE CREAM-LIKE PRODUCT AND METHOD FOR PRODUCING SAME**

EISCREME ODER EISCREME-ÄHNLICHES PRODUKT SOWIE HERSTELLUNGSVERFAHREN DAFÜR

CRÈME GLACÉE OU PRODUIT DE TYPE CRÈME GLACÉE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 JP 2010081175**

(43) Date of publication of application:
**06.02.2013 Bulletin 2013/06**

(73) Proprietors:
• **Ajinomoto Co., Inc.**
**Tokyo, 104-8315 (JP)**
• **Amano Enzyme Inc.**
**Nagoya-shi**
**Aichi 460-8630 (JP)**

(72) Inventors:
• **MIWA, Noriko**
**Kawasaki-shi**
**Kanagawa 210-8681 (JP)**
• **OHASHI, Wakako**
**Kawasaki-shi**
**Kanagawa 210-8681 (JP)**

(74) Representative: **Strehl Schübel-Hopf & Partner**
**Maximilianstrasse 54**
**80538 München (DE)**

(56) References cited:
**EP-A1- 1 839 491      JP-A- 6 303 912**
**JP-A- 7 184 554      JP-A- H0 591 840**
**JP-A- 2003 250 460      US-A- 5 082 672**

**Description**

TECHNICAL FIELD

[REFERENCE TO RELATED APPLICATION]

The present invention relates to an ice cream or ice cream-like product and a method for producing the same. In more detail, the present invention relates to a method for producing an ice cream or ice cream-like product, to which a rich body flavor and a smooth texture have been imparted, an ice cream or ice cream-like product having improved properties such as overrun or color.

BACKGROUND

An ice cream or ice cream-like product is a food having a smooth taste, in which milk and dairy products are used as main materials and other materials such as egg and sugar are added as necessary, and which is obtained by semi-freezing or by freezing while stirring and whipping such a mixture of materials. It is believed that rich tasting, smoothly melting well in the mouth, smoothness, full-bodied flavor etc. of an ice cream or ice cream-like product are brought by a homogeneous and fine texture and body, and it is believed that this texture formation and body flavor are brought by milk ingredients such as milk fat.

In recent years, there is a tendency to require the eating habits which suppress excessive ingestion of fat because of a rise of consumers' health consciousness. Therefore, even in an ice cream or ice cream-like product in which the content of milk fat is decreased, the technology of offering an ice cream or ice cream-like product having smooth and rich texture peculiar to milk fat is in need. Responding to this request, various raw materials such as starch, a starch hydrolysate, chemically processed starch, and milk whey protein have been used as alternative raw materials of fat. For example, it is disclosed in prior art Literatures that the method containing a starch hydrolysate (Patent Literature 1), the method containing whey protein isolate (WPI) having an increased protein concentration to 90% or above (Patent Literature 2), the method containing whey protein concentrate (WPC) (Patent Literature 3), the method containing the heat-denatured milk whey protein and dextrin (Patent Literature 4), the heat-denatured milk whey protein containing whey protein (Patent Literatures 5 and 6) etc. are useful as an alternative for fat.

PRIOR ART LITERATURES

PATENT LITERATURES

   [Patent Literature 1] JP0705994A
   [Patent Literature 2] JP02042943A
   [Patent Literature 3] JP02255046A
   [Patent Literature 4] 2009219416A
   [Patent Literature 5] JP05500163A
   [Patent Literature 6] JP03087148A
   [Patent Literature 7] JP 2000050887A
   [Patent Literature 8] JP2001218590A
   [Patent Literature 9] JP2003 250460A
   [Patent Literature 10] WO2006/075772
   [Patent Literature 11] WO2009/154212

NON-PATENT LITERATURES

   [Non-Patent Literature 1] Yamaguchi et al., Appl. Environ. Microbiol., 66, p.3337-3343 (2000)
   [Non-Patent Literature 2] Eur. J. Biochem 268 p.1410-1421 (2001)

## SUMMARY OF INVENTION

## PROBLEM TO BE SOLVED BY INVENTION

Following analyses are given by the present invention.
However, a starch hydrolysate such as dextrin has a low stability at a lower temperature; and a long storage period brings about not only roughness and powdery feeling but also a quality loss such as deterioration of the full-bodied taste and flavor; and it seems that there is no sufficient effect of the fat-alternative. In addition, as for the denatured milk whey protein, smoothness and creaminess can be given to a food without any influence by the food composition due to application of the denaturation process such as heat; on the other hand, a smell and flavor peculiar to the whey affect the food, and also viscosity rises in the case where an addition amount is increased for supplying a rich taste peculiar to fat, and there has been an inconvenience on work. Moreover, there is a problem in the cost of the heat-denatured milk whey protein itself. Furthermore, in the case where the chemically processed starch is blended with dairy products, while there are effects in the feeling upon eat such as an improvement in water holding property, provision of a rich texture etc., there are problems that a sufficient property to keep a shape is not obtained, a texture like paste is strong and a feeling of smooth melting in the mouse worsens, flavor release falls etc. On the other hand, in the case where a polysaccharide is blended with dairy products, while there are improvements in a property to keep a shape and an improvement effect of a feeling of smooth melting in the mouth, there are problems that a fat-like richness is not obtained satisfactorily etc.

In the method for producing an ice cream or ice cream-like product, there is a process of freezing which sends air into raw materials while cooling them. It is the most important process in the processes of producing an ice cream or ice cream-like product to make a smooth texture and flavor by making air contained in a mix. At this time, the ratio of the mix to the volume is decreased more when the ratio of air content to the mix (it is called overrun (%))is higher; and as a result, the cost of raw materials can be reduced also even in an ice cream or ice cream-like product having the same volume. Furthermore, not only improvement in the texture and physical-properties but an excessive ingestion of fat and calorie can also be suppressed by the improvement of overrun. However, in a conventional process of producing an ice cream or ice cream-like product, there is almost no case to report that even if a milk fat is reduced, a rich body flavor and a smooth texture are given and a moderate rich taste can be brought and besides the improvement of overrun has been attempted.

When a milk fat is reduced, a color tone change (fading) is to be mentioned, as one of the quality deterioration which may often take place. For example, while the ice cream which uses an egg (egg yolk) shows light yellow, it may be a little tinged with white in case of reducing the fat. However, although many attempts for improving texture by an alternative raw material of the milk fat as mentioned above have been made, there is no case in which color tone change (fading) control has been achieved.

Thus, in the conventional techniques, it is the present status that both texture and physical properties required for an ice cream or ice cream-like product, especially those having a decreased content ratio of milk fat, cannot fully be satisfied, and development of a production technology is desired for an ice cream or ice cream-like product having a smooth and rich texture and outstanding physical properties, especially an ice cream or ice cream-like product to have good texture and physical properties even if the content ratio of milk fat is decreased.

In the meanwhile, a protein deamidating enzyme, which acts directly on an amide group in proteins, is an enzyme to catalyze a reaction of deamidation. Thereby it causes transformation of glutamine residues into glutamic acid residues to generate carboxylic group, which results in an increase of negative charge, an increase of electrostatic repulsive force, a fall of an isoelectric point, an increase of hydration capability etc. of protein. As a result, it has been known that various improvements in functionalities such as an increase of solubility of protein and dispersion of protein in water, and an improvement of emulsification ability etc. are rendered (Non-Patent Literatures 1 and 2, Patent Literatures 7-11). In addition, a method of using the protein deamidating enzyme in food products is disclosed in Patent Literatures 7, 9, 10 and 11, among these prior Literatures, there is a description relating an alteration of functional properties of wheat gluten, milk protein (mainly, whey protein) using the enzyme concerned. A method of using the protein deamidating enzyme for yoghurt, cheese and pudding is disclosed in Patent Literature 10, and a method for manufacturing the starch-containing food in which color, luster and texture are good and time degradation after cooking is controlled by adding a milk which is treated with the protein deamidating enzyme to a starch containing food such as bread and white sauce is disclosed in Patent Literature 11. However, with the aim of the technology of improving the texture and physical properties of ice cream and the improved quality of the low-fat ice cream using such technology, any case in which the protein deamidating enzyme was used has not been reported yet.

The present invention aims to provide an ice cream or ice cream-like product, to which a rich body flavor and a smooth texture are imparted, and a method for producing the same; or even if a fat is reduced, to provide an ice cream or ice cream-like product having a good texture and physical properties, and a method for producing the same.

MEANS TO SOLVE THE PROBLEM

In order to accomplish the above object, inventors of the present invention have repeatedly scrutinized intensively. As a result, they have found that the protein deamidating enzyme is added and allowed to act on a milk material or a liquid ice cream mix used for producing an ice cream or ice cream-like product, thus a milk protein in the milk material is deamidated and thereby a rich body flavor and a smooth texture are imparted to an obtained ice cream or ice cream-like product; further also found that an ice cream or ice cream-like product keeping a good texture and physical properties even if a fat is reduced can be provided; and they completed the present invention. That is, the present invention is as follows.

1. A method for producing an ice cream or ice cream-like product, wherein an enzyme capable of deamidating without crosslinking a protein is added and allowed to act on a milk material or a liquid ice cream mix, wherein the deamidation rate of the milk proteins in the milk material or the liquid ice cream mix, to which the enzyme is added and allowed to act, is 68-100%, and wherein a whey protein in an amount of 0.1-3% of the liquid ice cream mix is added and mixed.

2. An ice cream or ice cream-like product, produced by the method according to claim 1.

3. A low fat ice cream or ice cream-like product in which the fat content is 3-8%, produced by the method according to claim 1.

ADVANTAGEOUS EFFECTS OF INVENTION

According to the present invention, a reduced-fat ice cream with a rich and smooth texture, in which insufficiency in flavor or taste is suppressed and also physical properties (color tone or overrun) are improved can be obtained.

MODE FOR CARRYING OUT THE INVENTION

An ice cream or ice cream-like product of the present invention is an ice cream or ice cream-like product defined in the Japanese Food Sanitation Act and the Ministerial Ordinance etc. relating to the ingredient standard of milk and dairy products. That is, this is what is obtained by freezing a food produced with milk(s) as a raw material(s) or a food having these milks as raw material(s), provided that 3% or more of the milk solid is contained (except for fermented milk). Concretely, ice cream, ice milk, and lacto ice are included. Generally, an ice cream or ice cream-like product is produced such that a preparation (ice cream mix) in which raw materials such as milk, a dairy product, sugar, fats, eggs, an emulsifier, a stabilizer, a flavoring agent and a colorant are blended-dissolved is homogenized, sterilized followed by cooling, and through a process temporarily maintaining at 0-5°C called as aging.
As for the method for producing an ice cream or ice cream-like product of the present invention, it is characterized that a protein deamidating enzyme is added and allowed to act on a milk material such as milk, concentrated milk, whole-powdered milk, non-fat milk and non-fat dry milk, and that the milk protein in the milk material is deamidated.
Alternatively, the ice cream or ice cream-like product of the present invention can be also produced by a method such that a protein deamidating enzyme is subjected to reaction in a liquid ice cream mix which is prepared by blending and dissolving raw materials such as sugar or an emulsifier into the milk material, and the deamidating treatment is applied to the milk protein in the ice cream mix. In addition, in the present invention, the ice cream mix means a mixture containing milk, a milk product (cream, butter, condensed milk, powdered milk etc.), a saccharide (sugar etc.), a stabilizer, an emulsifier, flavor and colorant.
In addition, in the method for producing an ice cream or ice cream-like product of the present invention, the effect which gives smooth and rich texture can be enhanced by that a whey protein is additionally added to the ice cream mix containing a milk material, to which the protein deamidating enzyme has been added and allowed to act in advance; or to the ice cream mix, to which the protein deamidating enzyme has been added and allowed to act. Alternatively, the protein deamidating enzyme may be added for reaction after the whey protein is added to the ice cream mix before the addition and the reaction of the protein deamidating enzyme. A timing at which the whey protein is added to the ice cream mix is not restricted; however, for example, it may be convenient at the time for preparing the ice cream mix by blending/dissolving raw materials, such as a milk material, sugar, an emulsifier etc. As for the whey protein to be used, whey protein concentrate (WPC) and whey protein isolate (WPI) and the like are applicable, and the addition amount is preferably 0.1-3%, more preferably 0.2-2% appropriately to an ice cream mix.
In the method for producing an ice cream or ice cream-like product of the present invention, stabilizers such as a thickener, a gelling agent and an adhesive agent, egg yolks, glycerin mono-fatty acid esters, sucrose, an emulsifier such as glycerin ester of fatty acid, a colorant, a flavor, etc. may be added if necessary.

The protein deamidating enzyme used for the present invention is not limited as far as it possesses a function to directly act on amide group in a protein, so as to cut a peptide bonding and deamidate the protein without cross-linking. As examples of such enzyme, a protein deamidating enzyme derived from genera Chryseobacterium, Flavobacterium or Empedobacter as disclosed in JP2000 50887A (Patent Literature 7), JP2001 21850A [sic. JP2001 218590A] (Patent Literature 8) and WO2006/075772 (Patent Literature 10), a protein-glutaminase, commercially available in the market, derived from genera Chryseobacterium and the like are exemplified but not limited thereto. Preferably, an enzyme derived from genera Chryseobacterium is elected. As for a transglutaminase, it is not included in the protein deamidating enzyme according to the present invention because when acting the transglutaminase on food materials, it brings about a cross-linking reaction, with priority, in proteins accompanied by almost no deamidating reaction. Furthermore, the disclosures of the above Patent Literatures 7, 8 and 10 are referred to.

A protein deamidating enzyme can be prepared from a culture liquid for microorganism that produces a protein deamidating enzyme. Publicly known separation and purification methods of protein (such as centrifuging, UF concentration, salting-out, various kinds of chromatography with ion-exchanging resin, etc.) can be used as a preparation method of a protein deamidating enzyme. For example, the culture liquid is centrifuged to remove bacteria cells, and then salting-out and chromatography, and the like may be combined to obtain the target enzyme. When collecting the enzyme from the interior of bacterial cells, bacterial cells can be crushed by a pressure processing or ultrasonic processing, for example, and then separated and purified as described above to obtain the target enzyme. Bacterial cells may be collected from a culture liquid by filtration or centrifuge, etc. prior to the processing steps above explained (such as crushing of bacterial cells, separation and purification). The enzyme may be powdered by a drying method such as freeze drying or vacuum drying, etc., and an appropriate bulking agent or drying adjuvant may be used at the drying step.

The activity of the protein deamidating enzyme in the present invention is measured by the following method:

(1) 0.1ml of an aqueous solution containing a protein deamidating enzyme is added to 1 ml of 0.2M phosphate buffer (pH6.5) containing 30mM Z-Gln-Gly, and incubated at 37°C for 10 minutes, and then reaction is ceased by adding 1 ml of 0.4M TCA solution. 0.1ml of an aqueous solution containing the protein deamidating enzyme is added to a solution containing 1 ml of 0.2M phosphate buffer (pH6.5) containing 30mM Z-Gln-Gly and 1 ml of 0.4M TCA solution, and incubated for 10 minutes at 37°C to prepare a solution as a blank.

(2) An amount of ammonia generated by the reaction in the solution obtained in (1) is measured by using Ammonia-test Wako (manufactured by Wako Pure Chemical Industries, Ltd.). An ammonia concentration in the reaction solution is determined using a calibration curve indicating a relation between the ammonia concentration and the variation of absorbance (at 630nm) prepared using an ammonia standard solution (ammonium chloride).

(3) Activity of a protein deamidating enzyme, where the amount of enzyme required to produce 1 $\mu$ mol of ammonia per 1 min is defined as 1 unit, is calculated by the following formula.

Enzymatic activity (u/mL) = the ammonium concentration in the reaction solution (mg/L) × (1/17.03) × (the volume of the reaction solution/the volume of the enzyme solution) × (1/10) × Df (17.03: the molecular weight of ammonia, 2.1: the volume of the solution of the enzyme reaction system, 0.1: the volume of the enzyme solution, 10: the reaction time, Df: the dilution rate of the enzyme solution)

In the method for producing an ice cream or ice cream-like product of the present invention, there are two methods which make the protein deamidating enzyme act. The first method is a method in which the protein deamidating enzyme is allowed to act after the milk protein content of the solution containing a milk material such as milk, non-fat dry milk etc. is adjusted by the dissolution and preparation of the solution to be 0.1-7.0% by weight, preferably 0.5-6.0% by weight (the pre-incubation method). The other method is a method in which the milk protein deamidated with a protein deamidating enzyme in advance is re-dissolved in the aqueous phase (an addition method of deamidated milk protein). That is, it is a method such that the solution containing a milk material such as milk is treated with the protein deamidating enzyme to prepare a deamidated milk protein, then the solution itself or one dried and powdered thereof is treated with addition of water or concentrated, and the solution is prepared so that the deamidated protein content is 0.1-7.0% by weight, preferably 0.5-6.0% by weight. In either method, the enzyme may be deactivated suitably by heating at 75°C or above.

Subsequently, the method in which the protein deamidating enzyme is added to the milk material such as milk or a liquid ice cream mix and is reacted therein is explained. In the present invention, it is preferable to perform the reaction in order that the deamidation rate of the milk protein in the milk material is to be 68% or above, that is 68%-100%, and the enzymatic reaction conditions (such as an amount of the enzyme, reaction time, temperature, pH of the reaction solution etc.) for being such a state may be suitably set, in order that the deamidation rate of the milk protein in the milk material mixed-solution is to be within a proper range. It is preferable that the deamidation rate is higher, and in the case where it is less than 68% there is a tendency for sufficient texture improvement effect over ice cream not to be acquired, with lowering of the deamidation rate. For example, in a case where the amount of enzyme is low, although the reaction time may be elongated, the general addition amount of the protein deamidating enzyme is preferably 0.01-100 units, and more preferably 0.1-25 units per 1g (dried weight) of the milk protein. Preferable reaction temperature is 5-75°C, and more preferably 5-60°C. Preferable pH of the reaction solution is 2-10, and more preferably 4-8. Preferable reaction time is from 10 seconds to 48 hours, and more preferably from 10 minutes to 24 hours.

The deamidation rate used in the present invention shows to what degree glutamine residues in the milk proteins in the solution containing a milk material were deamidated with the protein deamidating enzyme. The state where all glutamines in proteins in the milk material mixed-solution are deamidated is defined as 100%. In a case where 15 units of the enzyme is added to 1g of the milk protein and the resulting mixture is subjected to reaction at 55°C for an hour, the deamidation reaction reaches saturation. Thereby, a maximum reaction amount (an amount of ammonia) which shows 100% of the deamidation rate can be obtained. That is, the deamidation rate is obtained based on the following formula.

The deamidation rate (%) = [the amount of ammonia in the milk raw material mixed-solution in case of reacting the protein deamidating enzyme into the milk raw material mixed-solution] ÷ [the amount of ammonia in the milk raw material mixed-solution in case of reacting for an hour at 55°C by adding the same enzyme (15 units / 1 g milk protein) into the same milk raw material mixed-solution] × 100

The amount of ammonia generated by the deamidation reaction can be measured by commercially available ammonia measuring kit. For example, the enzymatic reaction is stopped by adding to the milk material mixed-solution (as for the pre-incubation method) or the milk protein solution (as for the addition method of deamidated milk protein) 12% TCA of the same quantity as the solution, and the amount of ammonia in the supernatant obtained by centrifugation (12,000 rpm, 5°C, 5 minutes) is measured using F-kit (Roche). In detail, 10 $\mu$l of the supernatant and 190 $\mu$l of 0.1M triethanolamine buffer (pH 8.0) are added to 100 $\mu$l of liquid reagent II (an attachment of the F-kit) and settled for 5 minutes at room temperature. After that an absorbance at 340 nm is measured using 100 $\mu$l of the resultant solution. 1.0 $\mu$l of reagent III (an attachment of the F-kit, glutamate dehydrogenase) is added to the remaining 200 $\mu$l of the solution and settled for 20 minutes at room temperature and then an absorbance at 340 nm is measured using the 200 $\mu$l of the solution. An ammonia concentration in the supernatant is determined using a calibration curve indicating the relation between the ammonia concentration and the variation of absorbance (at 340 nm) prepared using an ammonia standard solution attached to the F-kit, and thereby the amount of ammonia in the milk material mixed-solution or the milk protein solution is determined. In addition, in a case where the measurement is out of the range of standard curve, the solution for measurement is appropriately diluted with water, and then measured.

As described in the above, an ice cream or ice cream-like product of the present invention becomes a product filled in a container such that the ice cream mix containing the milk material treated by the protein deamidating enzyme or the ice cream mix treated by the protein deamidating enzyme is aged if necessary, and then is subjected to a process called as freezing. The freezing is performed for the purposes of freezing water in the mix, obtaining a moderate overrun in the mix, and making the distribution of each phase of solid, gas and liquid uniform. The overrun is the percentage of the air content to the volume of the mix, and serves as an index which determines quality of the product. An improvement of physical properties, such as overrun, can also be aimed at, as for an ice cream or ice cream-like product of the present invention.

A low fat ice cream or ice cream-like product of the present invention indicates one whose fat content is 3-8%, and the fat content in an ice cream or ice cream-like product can be measured by a usual method.

While the present invention will be explained in detail with examples and comparative examples as follows, the present invention is not restricted at all by such examples.

EXAMPLE 1

The protein deamidating enzyme in an amount of 2U, 4U or 10U per 1g of proteins was added to commercially available whole-fat milk (protein content 3.2%, Magokoro Rakuno 3.6 milk: Takanashi Milk Products Co., Ltd), respectively, and then subjected to reaction at 55°C for 60 minutes. The protein glutaminase (manufactured by Amano Enzyme Inc., 500 U/g, derived from genera Chryseobacterium; hereinafter may be abbreviated as PG) was used as the protein deamidating enzyme. The deamidation rate of the milks prepared by the enzymatic treatment was 34%, 68% and 100%, respectively.

An ice cream mix was prepared by the composition shown in Table 1. That is, a sweetened egg yolk ("Yolk Rate LM" TAIYO KAGAKU CO., LTD.), granulated sugar, non-fat dry milk (YOTSUBA Co., Ltd), glucose-fructose syrup ("High-Fructoka 55" Kato Kagaku Co., Ltd), fresh cream ("Pure fresh cream 47" Takanashi Milk Products Co., Ltd) and the milk which was deamidated by the PG treatment were added in order, and this mixture was agitated for 1 minute with Bamix (made by Bamix) and swelled for 30 minutes at room temperature, then was sterilized for 1 minute at 85°C in a boiled-water bath, and cooled with ice water immediately. An evaporated part of water content by heat sterilization was adjusted, and it was homogenized at 10,000 rpm by T.K Robomix (Tokushu-Kika-Kogyo) for 5 minutes, and after cooling it was aged in a refrigerator (over night). The aged ice cream mix was treated with an ice creamer (Hypertron HTF-6, (K.K.) FMI) for 20 minutes, and the treated mix was filled in a container, and it was made to solidify in a freezer (-18°C or below), and a low-fat ice cream in which a fat content is 5.5% was obtained. In addition, the low-fat ice cream was prepared similarly using an untreated-milk in which the enzyme is not added, as a control product. Further, the whole-fat ice cream in which the fat content is 13.4% was prepared similarly, as a target product.

## [Table 1]

| Raw materials | Whole-fat (13.4%) Target product | Low-fat (5.5%) Control product |
|---|---|---|
| Milk (fat 3.7%) | 58.85 | 77.15 |
| Cream (fat 47%) | 22.6 | 4.4 |
| Non-fat dry milk | 5.7 | 6.5 |
| Glucose-fructose syrup (High-Fructoka 55) | 4.8 | 3.9 |
| Granulated sugar | 4.4 | 4.4 |
| Egg yolk (egg yolk : sugar = 1:1) | 3.5 | 3.5 |
| Natural flavor (vanilla) | 0.15 | 0.15 |
| total | 100 | 100 |

A sensory evaluation was done by a panel of 6 skilled persons. Regarding "smooth and rich texture", the target product was set as +3 points and the control product was set as -3 points, and where the texture of the ice cream prepared using the deamidated milk by the PG treatment would be positioned was evaluated by scoring. In Table 2, the average values of 6 persons are indicated. Although the control product had a crunchy texture like sherbet, an evaluation score became high with the increasing degree of PG treatment and it had approached to smooth and rich texture of the whole-fat ice cream. However, as for the product treated with 2U of PG, i.e., the ice cream prepared with the milk having 34% of the deamidation rate, while it is improved more than the control product it was not enough as to the degree of its effect (compared product 1). On the other hand, as for the ice cream which had a composition of the milk treated with 4U and 10U of PG, i.e., the milk having 68% and 100% of the deamidation rate (the invention products 1 and 2), they had a clearly improved effect of texture.

[Table 2]

| | Whole-fat (13.4%) | Low-fat (5.5%) | | | |
|---|---|---|---|---|---|
| | Target product | Control product | Compared Product 1 | Invention Product 1 | Invention Product 2 |
| Evaluation item | - | - | Deamidation rate 34% | Deamidation rate 68% | Deamidation rate 100% |
| Strength of smooth and rich texture | 3 | -3 | 0.5 | 1.9 | 2.6 |

In addition, the result in which the overrun (%) was measured is shown in Table 3. There is a tendency that the overrun value of the low-fat ice cream is a little higher than that value of the whole-fat ice cream, and overrun values of the invention products 1 and 2 exceeded that value of the control product further. There was not shown a big difference in overrun between the compared product 1 and control product. Moreover, color differences (L, a*, b* value) of ice creams were measured by a color-difference meter (Minoruta Camera, CR-300). Among them, b* value which shows the yellow strength which has a difference in appearance was focused upon. The result is shown in Table 4. As shown in Table 4, while there was a tendency that b* value of the control product was decreased and yellow became weak, b* value increased with the increasing degree of PG treatment, compared to the target product. And, in invention products 1 and 2, it was also observed through visual observation that the yellowish color tone was approaching to the target product. Thus, as for the ice cream

(invention products 1 and 2) which uses the milk having the deamidation rate of 68% or above, it turns out that smooth and rich texture is given and it was also recognized that physical properties such as overrun and a color tone are improved, too.

[Table 3]

| | Whole-fat (13.4%) | Low-fat (5.5%) | | | |
|---|---|---|---|---|---|
| | Target product | Control product | Compared Product 1 | Invention Product 1 | Invention Product 2 |
| | - | - | Deamidation rate 34% | Deamidation rate 68% | Deamidation rate 100% |
| Overrun (%) | 15.81 | 16.3 | 17.43 | 19.15 | 19.34 |
| Standard deviation | 1.80 | 0.7296 | 1.04 | 1.02 | 0.32 |

[Table 4]

| | Whole-fat (13.4%) | Low-fat (5.5%) | | | |
|---|---|---|---|---|---|
| | Target product | Control product | Compared Products 1 | Invention Product 1 | Invention Product 2 |
| | - | - | Deamidation rate 34% | Deamidation rate 68% | Deamidation rate 100% |
| b* value | 16.4 | 13.9 | 14.4 | 15.3 | 16.2 |
| Standard deviation | 0.37 | 0.11 | 0.26 | 0.57 | 0.73 |

EXAMPLE 2

The whey protein is known as the existing material for improving the texture of ice cream. As a compared product, a low-fat ice cream was prepared as a trial (compared product 2), according to the same method as Example 1 with adding 1.5% of the whey protein concentrate "Bipro" (made by DAVISCO) instead of decreasing 1.5% of the addition ratio of the milk. Results of the sensory evaluation, the measurement of overrun and the measurement of b* value, and comments which were raised at the time of the sensory evaluation are shown in Table 5. As for the compared product 2, while there was a body and smooth texture was given like the invention product 2, a flavor peculiar to the whey was given. On the other hand, the invention product 2 was advantageous from the view point of that not only the texture has been improved but also there is almost no influence on the taste or flavor. Moreover, it was shown that the invention product 2 is superior to what was prepared using the whey protein material, also from the view point of the improvement in overrun or a color tone improvement (yellow strength).

[Table 5]

| | Whole-fat (13.4%) | Low-fat (5.5%) | | |
|---|---|---|---|---|
| | Target product | Control product | Compared Product 2 | Invention Product 2 |
| | - | - | Whey protein | Deamidation rate by PG 100% |
| Strength of smooth and rich texture | 3 | -3 | 2.3 | 2.6 |
| Overrun (%) | 17.3 | 16.3 | 16.1 | 22.2 |
| b* value | 16.5 | 14.2 | 15.3 | 16.2 |
| Comments (total evaluation of taste, texture etc.) | Smooth, and rich texture and flavor of fat are felt and very desirable. | Not satisfactory for the feeling of melting on tongue quickly. As a whole, weak flavor. | While body and smooth texture are given, flavor peculiar to whey is given. | Smooth and rich texture is given. Almost no influence on flavor and it is desirable. |

EXAMPLE 3

Into a commercially available whole-fat milk (Magokoro Rakuno 3.6 milk: Takanashi Milk Products Co., Ltd), PG (manufactured by Amano Enzyme Inc.) was added by 10U per 1g of proteins, and a milk having 100% of the deamidation rate which was subjected to reaction at 55 °C for 60 minutes was prepared. Ice creams which gradually reduced the fat content based on the composition shown in Table 6 were prepared. That is, using the milk which was deamidated by PG, ice cream mixes of whole-fat (milk fat 13.4%), 20% reduction of milk fat (milk fat 10.1%), 40% reduction of milk fat (milk fat 8.1 %) and 60% reduction of milk fat (milk fat 5.5%) were prepared, and they were subjected to mixing, swelling, sterilizing, homogenizing, aging, freezing, filling and solidifying as the same method as Example 1 so as to obtain ice creams (invention products 2-5, respectively). Similarly, a whole-fat ice cream (target product) having 13.4% of milk fat and the ice cream (60% reduction of milk fat) (control product) having 5.5% of milk fat was prepared using untreated milk. Also, as for compared products, ice cream mixes of 20% reduction of milk fat (milk fat 10.1 %) and 40% reduction of milk fat (milk fat 8.1 %) were prepared, and ice creams were obtained similarly (compared products 3 and 4, respectively). In addition, all the proteins contained in these ice creams were uniformly fixed at 4.6%.

A sensory evaluation was done by a panel of 6 skilled persons. Regarding "smooth and rich texture", the target product was set as +5 points and the control product was set as +1 point, and where the invention products 2-5 and compared products 3 and 4 would be positioned was evaluated by scoring. In Table 7, the average values of 6 persons are indicated. First, in the case where comparing between ice creams having the same fat content, the ice creams (invention products 2-5) prepared using the milk which was deamidated by PG had evaluating points that are higher than that points of the ice creams (the control product, the target product, the compared products 3 and 4) prepared using untreated milk.

In the invention product 5 of 40% reduction of fat, "smooth and rich texture" was almost equivalent to that of the target product, and that of invention product 3 of the whole-fat and that of the invention product 4 of 20% reduction of fat exceeded that of the target product. Also as for the invention product 2 of 60% reduction of fat, its texture approached to the texture of the target product, and this result corresponded to Example 1. Thus, in the ice creams having different fat content which were prepared using the deamidated milk by PG, it was recognized that a texture to which the fat content was further increased can be given. Moreover, in invention products 2-5, each b* value was larger than that of the target product, the compared products 3 and 4, and the control product respectively, and it was also recognized here that there is a tendency for the yellowish tone to become strong.

[Table 6]

| Raw materials | Fat content (%) | | | |
|---|---|---|---|---|
| | 13.4 (whole-fat) | 10.1 (20%-reduction) | 8.1 (40%-reduction) | 5.5 (60%-reduction) |
| | Target product | Compared Product 3 | Compared Product 4 | Control product |
| Milk (untreated) | 58.85 | 66.95 | 71.85 | 77.95 |
| Milk (PG treated: deamidation rate 100%) | 0 | 0 | 0 | 0 |
| Fresh cream (fat 47%) | 22.6 | 15 | 10.3 | 4.4 |
| Non-fat dry milk | 5.7 | 5.4 | 5.2 | 5 |
| Glucose-fructose syrup | 4.8 | 4.7 | 4.7 | 4.7 |
| Sugar | 4.4 | 4.3 | 4.3 | 4.3 |
| Sweetened egg yolk | 3.5 | 3.5 | 3.5 | 3.5 |
| Natural flavor (vanilla) | 0.15 | 0.15 | 0.15 | 0.15 |
| | 100 | 100 | 100 | 100 |

| Raw materials | Fat content (%) | | | |
|---|---|---|---|---|
| | 13.4 (whole-fat) | 10.1 (20%-reduction) | 8.1 (40%-reduction) | 5.5 (60%-reduction) |
| | Invention Product 3 | Invention Product 4 | Invention Product 5 | Invention Product 2 |
| Milk (untreated) | 0 | 0 | 0 | 0 |
| Milk (PG treated: deamidation rate 100%) | 58.85 | 66.95 | 71.85 | 77.95 |
| Raw cream (fat 47%) | 22.6 | 15 | 10.3 | 4.4 |
| Non-fat dry milk | 5.7 | 5.4 | 5.2 | 5 |

| | | | |
|---|---|---|---|
| Glucose-fructose syrup | 4.8 | 4.7 | 4.7 | 4.7 |
| Sugar | 4.4 | 4.3 | 4.3 | 4.3 |
| Sweetened egg yolk | 3.5 | 3.5 | 3.5 | 3.5 |
| Natural flavor (vanilla) | 0.15 | 0.15 | 0.15 | 0.15 |
| | 100 | 100 | 100 | 100 |

| | Fat content (%) | | | |
|---|---|---|---|---|
| | 13.4 (whole-fat) | 10.1 (20%-reduction) | 8.1 (40%-reduction) | 5.5 (60%-reduction) |
| | Target product | Compared Product 3 | Compared Product 4 | Control product |
| Strength of smooth and rich texture | 5 | 2.53 | 1.52 | 1 |
| | Fat content (%) | | | |
| | 13.4 (whole-fat) | 10.1 (20%-reduction) | 8.1 (40%-reduction) | 5.5 (60%-reduction) |
| | Invention Product 3 | Invention Product 4 | Invention Product 5 | Invention Product 2 |
| Strength of smooth and rich texture | 6.7 | 6.13 | 5.33 | 4.05 |

EXAMPLE 4

The present invention can obtain a desirable effect by a combination use with the whey protein and by applying PG treatment onto not only the milk but also the whole of the ice cream mix. According to compositions of Table 8, ice creams were prepared as follows. First, into a commercially available whole-fat milk (Magokoro Rakuno 3.6 milk: Takanashi Milk Products Co., Ltd), PG (manufactured by Amano Enzyme Inc.) was added by 10U per 1 g of proteins in the milk, which was subjected to reaction at 55°C for 60 minutes to prepare a milk having 100% of the deamidation rate. In addition to such milk and other base raw materials (see Table 1), an ice cream mix admixed with 0.5% of the whey protein concentrate "Bipro" (made by DAVISCO) was subjected to mixing, swelling, sterilizing, homogenizing and aging as the same method as Example 1 so as to prepare an ice cream mix, and the prepared ice cream mix was subjected to freezing, filling and solidifying to obtain a low-fat ice cream having 5.5% of fat content (the invention product 6). Besides, an untreated milk and other base raw materials (see Table 1) were mixed and stirred by a Bamix (the protein content of the mix: 5.12%), to which mix PG was added by 4.4U per 1g of proteins, and the stirred mixture was subjected to reaction at 55°C for 60 minutes. After the reaction, an ice cream mix was prepared by sterilizing, homogenizing and aging, and the prepared ice cream mix was subjected to freezing, filling and solidifying to obtain a low-fat ice cream having 5.5% of fat content (the invention product 7). As the same as Examples 1 and 2, a low-fat ice cream having 5.5% of fat content was obtained by using the untreated milk without adding the enzyme as a control product, and a whole-fat ice cream having 13.4% of fat content was obtained by using the untreated milk as a target product. Further, an ice cream mix with adding 0.5% of the whey protein concentrate "Bipro" (made by DAVISCO) was prepared by using the untreated milk without adding the enzyme to obtain a low-fat ice cream having 5.5% of fat content (compared product 5).

[Table 8]

| | Whole-fat (13.4%) | Low-fat (5.5%) | | | |
|---|---|---|---|---|---|
| | Target product | Control product | Compared Product 5 | Invention Product 6 | Invention Product 7 |
| | Untreated milk | Untreated milk | Untreated Milk + Whey 0.5% | PG treated Milk + Whey 0.5% | PG treated for all raw materials including untreated milk |
| Milk (untreated or PG treated) | 58.85 | 77.15 | 76.65 | 76.65 | 77.15 |
| Cream (fat 47%) | 22.6 | 4.4 | 4.4 | 4.4 | 4.4 |
| Non-fat dry milk | 5.7 | 6.5 | 6.5 | 6.5 | 6.5 |
| Glucose-fructose syrup | 4.8 | 3.9 | 3.9 | 3.9 | 3.9 |
| Sugar | 4.4 | 4.4 | 4.4 | 4.4 | 4.4 |
| Egg yolk | 3.5 | 3.5 | 3.5 | 3.5 | 3.5 |
| Natural flavor (vanilla) | 0.15 | 0.15 | 0.15 | 0.15 | 0.15 |
| Whey protein concentrate Bipro® | 0 | 0 | 0.5 | 0.5 | 0 |
| PG powder | 0 | 0 | 0 | 0 | 0.049 |
| | 100 | 100 | 100 | 100 | 100 |

A sensory evaluation was done by a panel of 5 skilled persons. Regarding "smooth and rich texture", the target product was set as +3 points and the control product was set as -3 points, and where the invention products 6 and 7 are to be positioned was evaluated by scoring and calculating the average of 5 skilled persons. As shown in Table 9, as for the invention product 6, the strength of smooth and rich texture was almost equivalent to that of the target product. That is, 0.5% of the whey protein concentrate was added into the deamidated milk by PG, thereby the effect of improving the crunchy texture peculiar to the low-fat ice cream which is the control product increased, and it was recognized that an ice cream which has the equivalent texture to that of the whole-fat ice cream is obtained. As for the ice cream prepared as a compared product, i.e., compared product 5 with addition of the untreated milk and 0.5% of the whey protein concentrate, the smooth and rich texture were unable to be given sufficiently. On the other hand, also as for the invention product 7 which was prepared by allowing PG to act on the whole of the ice cream mix, the strength of smooth and rich texture almost approached to that of the target product. That is, due to the fact that an object which is to be treated by PG is not restricted to the milk, i.e., also due to the fact that proteins in the mix of the milk, the non-fat dry milk, and the egg yolk are deamidated by PG, it was recognized that the texture close to that of the target product can be obtained.

In addition, as a result of measuring overrun and b* value by the same method as the method in Example 1, as shown in Table 9, overruns of the invention products 6 and 7 were exceeding that of all of the target product, the control product and the compared product 5, and b* values of the invention products 6 and 7 were clearly higher than that of the control product and the compared product 5, and it was recognized that b* values of the invention products are close to the target product.

[Table 9]

| | Whole-fat (13.4%) | Low-fat (5.5%) | | | |
|---|---|---|---|---|---|
| | Target product | Control product | Compared Product 5 | Invention Product 6 | Invention Product 7 |
| | - | - | Whey 0.5% | PG 10U + Whey 0.5% for milk | PG 4.4U for the mixture |
| Strength of smooth and rich texture | 3 | -3 | 0.5 | 3 | 2.7 |
| Overrun(%) | 18.2 | 16.3 | 17.67 | 20.02 | 19.9 |
| b* value | 16.8 | 13.9 | 14.1 | 16 | 15.6 |

INDUSTRIAL APPLICABILITY

According to the present invention, it is intended that not only smooth and rich texture are given to an ice cream or ice cream-like product, but also physical-properties (overrun and color tone) can be improved. Furthermore, the quality is improvable even if it is a case of an ice cream or ice cream-like product of reduced-fat. Therefore, the present invention is very useful for the food industries.

**Claims**

1. A method for producing an ice cream or ice cream-like product, wherein an enzyme capable of deamidating without crosslinking a protein is added and allowed to act on a milk material or a liquid ice cream mix,
wherein the deamidation rate of the milk proteins in the milk material or the liquid ice cream mix, to which the enzyme is added and allowed to act, is 68-100%, and
wherein a whey protein in an amount of 0.1-3% of the liquid ice cream mix is added and mixed.

2. An ice cream or ice cream-like product, produced by the method according to claim 1.

3. A low fat ice cream or ice cream-like product in which the fat content is 3-8%, produced by the method according to claim 1.

**Patentansprüche**

1. Verfahren zum Herstellen einer Eiscreme oder eines eiscremeähnlichen Produkts, wobei ein Enzym, das ein Protein ohne Vernetzen deamidieren kann, zugegeben wird und zugelassen wird, dass es auf ein Milchmaterial oder ein flüssiges Eiscremegemisch wirkt, wobei die Deamidierungsrate der Milchproteine in dem Milchmaterial oder dem flüssigen Eiscremegemisch, zu dem das Enzym gegeben wird und seine Wirkung zugelassen wird, 68 bis 100 % ist, und wobei ein Molkeprotein in einer Menge von 0,1 bis 3 % des flüssigen Eiscremegemisches zugegeben und vermischt wird.

2. Eiscreme oder eiscremeähnliches Produkt, hergestellt durch das Verfahren nach Anspruch 1.

3. Eiscreme oder eiscremeähnliches Produkt mit geringem Fettgehalt, worin der Fettgehalt 3 bis 8 % ist, hergestellt durch das Verfahren nach Anspruch 1.

**Revendications**

1. Procédé de production d'une crème glacée ou d'un produit semblable à une crème glacée, dans lequel une enzyme apte à une déamidation sans réticulation d'une protéine est ajoutée et laissée à agir sur une matière de lait ou un mélange de crème glacée liquide,

dans lequel la vitesse de déamidation des protéines de lait dans la matière de lait ou le mélange de crème glacée liquide, auquel l'enzyme est ajoutée et laissée à agir, est de 68-100 %, et

dans lequel une protéine de petit-lait dans une quantité de 0,1-3 % du mélange de crème glacée liquide est ajoutée et mélangée.

2. Crème glacée ou produit semblable à une crème glacée, produite par le procédé selon la revendication 1.

3. Crème glacée ou produit semblable à une crème glacée à faible teneur en graisse, dans laquelle la teneur en graisse est de 3-8 %, produite par le procédé selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 0705994 A
- JP 02042943 A
- JP 02255046 A
- JP 05500163 A
- JP 03087148 A
- JP 2000050887 A
- JP 2001218590 A
- JP 2003250460 A
- WO 2006075772 A
- WO 2009154212 A
- JP 2001021850 A

**Non-patent literature cited in the description**

- **YAMAGUCHI et al.** *Appl. Environ. Microbiol.,* 2000, vol. 66, 3337-3343
- *Eur. J. Biochem,* 2001, vol. 268, 1410-1421